# EUROPÄISCHE PATENTANMELDUNG

(11) **EP 2 063 001 A1**
(43) Veröffentlichungstag der Anmeldung: **27.05.2009**
(21) Anmeldenummer: 07405329.9
(22) Anmeldetag: 20.11.2007
(51) Int. Cl.: C25D 11/08, B32B 15/08, B32B 15/20

(54) **Gegenstand aus einer mit Kunststoff hinterspritzten Aluminiumfolie**

(71) Anmelder: Alcan Technology & Management Ltd., 8212 Neuhausen am Rheinfall (CH)
(72) Erfinder: Pippig Schmid, Kristin, 9000 St. Gallen (CH)

(57) **Zusammenfassung**

Bei einem Gegenstand aus einer mit Kunststoff hinterspritzten Aluminiumfolie mit einer porösen anodischen Oxidschicht als Haftgrund weist die Aluminiumfolie eine in Phosphorsäure erzeugte anodische Oxidschicht mit einer Dicke von 200 nm bis 2000 nm auf. Mit dem erfindungsgemässen Aufbau einer einzigen Haftschicht durch eine Phosphorsäureanodisation lassen sich im Vergleich zu handelsüblichen, aus zwei Schritten bestehenden Haftsystemen, wie z.B. Voranodisation und Aufbringen eines haftvermittelnden Lackes, bessere Haftwerte erreichen.

## Beschreibung

Die Erfindung betrifft einen Gegenstand aus einer mit Kunststoff hinterspritzten Aluminiumfolie mit einer porösen anodischen Oxidschicht als Haftgrund. Im Rahmen der Erfindung liegt auch ein zur Herstellung des Gegenstandes geeignetes Verfahren.

Aus einem Artikel von F. Ehrig et al., Dekorative Bauteile durch das Hinterspritzen von Metallfolien, VDI-Kunststoffband B 4283, Spritzgiessen 2007, VDI Verlag, Düsseldorf 2007, ist die Hybrid-Technologie als Verbindung von Kunststoff-Metall-Komponenten für strukturelle Anwendungen als etabliertes Beispiel für die Kombination der Vorteile von Metall und Kunststoff genannt. Auch für dekorative Anwendungen bietet sich die Kombination dieser Werkstoffe an, um eine Preis- und Gewichtsreduktion im Vergleich zu klassischen Technologien zu realisieren.

Hierzu werden Metallfolien, z.B. aus Edelstahl oder Aluminium, mit einer Dicke bis 0,4 mm mit Kunststoff hinterspritzt. Die Metallfolien bilden die Oberfläche des Bauteils und verleihen den gewünschten Metalllook und den Cool Touch-Effekt beim Berühren der Teile. Durch den Spritzgiessprozess ist es möglich, Funktionen und Prozesse zu integrieren, wie zum Beispiel das Einbringen von Schnapphaken oder Befestigungsdomen. Da die Metallfolien sehr dünn sind, können durch den Spritzdruck gleichzeitig Werkzeugoberflächenstrukturen auf die Formteiloberfläche abgeformt werden. Hierdurch ergeben sich neue Designmöglichkeiten.

Allen Halbzeugen gemeinsam ist die Haftvermittlerschicht auf der Kontaktseite zum Kunststoff. Diese Haftvermittlerschicht muss vor dem Hinterspritzen auf die Metallfolie aufgebracht werden. Hierbei kann es sich um ein Lacksystem handeln, welches direkt beim Metallfolienlieferanten aufgetragen wird, oder es können Klebefilme aufkaschiert werden. Aluminiumfolien können für eine bessere aluminiumseitige Haftung der Haftvermittlerschicht eine poröse anodische Oxidschicht als Haftgrund aufweisen.

Der Erfindung liegt die Aufgabe zugrunde, die Oberflächeneigenschaften einer für das Hinterspritzen mit Kunststoff vorgesehenen Aluminiumfolie derart zu verändern, dass sich für die Herstellung eines hinterspritzten Teils eine im Vergleich zu bisherigen Vorbehandlungen kostengünstigere Lösung ergibt.

Zur erfindungsgemässen Lösung der Aufgabe führt bei einem Gegenstand der eingangs erwähnten Art, dass die Aluminiumfolie eine in Phosphorsäure erzeugte anodische Oxidschicht mit einer Dicke von 200 nm bis 2000 nm aufweist.

Mit dem erfindungsgemässen Aufbau einer einzigen Haftschicht durch eine Phosphorsäureanodisation lassen sich im Vergleich zu handelsüblichen, aus zwei Schritten bestehenden Haftsystemen, wie z.B. Voranodisation und Aufbringen eines haftvermittelilden Lackes, bessere Haftwerte erreichen.

Die auf der Aluminiumfolie als Haftgrund für den hinterspritzten Kunststoff durch anodische Oxidation in einem Phosphorsäure-Elektrolyt erzeugte poröse Oxidschicht weist eine bevorzugte Dicke von 800 nm bis 1500 nm auf.

Die Dicke der Aluminiumfolie liegt üblicherweise im Bereich von 100 µm bis 800 µm, vorzugsweise 150 µm bis 500 µm.

Ein besonders bevorzugter Kunststoff ist ein thermoplastisches Polyurethan, insbesondere ein Acrylnittil-Butadien-Styrol/Polycarbonat Block-Copolymer.

Ein weiterer, ebenfalls bevorzugter Kunststoff ist ein thermoplastisches Polyamid, insbesondere Polyamid-66.

Die nachfolgend dargelegten Untersuchungsergebnisse an mit Kunststoff hinterspritzten Aluminiumfolien mit erfindungsgemässem Haftgrund und mit einem Haftgrund nach dem Stand der Technik zeigen die Vorteilhaftigkeit der erfndungsgemässen Phosphorsäureanodisation gegenüber den Systemen mit einem Haftvermittler.

Aluminiumfolie mit einer Dicke von 0.2 mm wurde in einer Anodisieranlage einer Standardvorbehandlung mit alkalischem Entfetten, alkalischem Beizen und Dekapieren unterzogen und anschliessend in einem Phosphorsäure-Elektrolyt anodisch oxidiert.

Die Entfettung erfolgt z. B. mit einem alkalischen Reiniger, enthaltend Borate, Carbonate, Phosphate und nichtionische Tenside bei einer Temperatur von 50 - 70 °C.

Das Beizen erfolgt z. B. in einem Natronlauge, Alkohole und Salze anorganischer Säuren enthaltenden Beizmittel bei einer Temperatur von 30 - 50 °C.

Das Dekapieren erfolgt z. B. mit einem sauren, Salze anorganischer Säuren sowie anorganische Säuren enthaltenden Dekapiermittel bei einer Temperatur von etwa 20 °C. Nach jedem Verfahrensschritt wird die Aluminiumfolie mit entionisiertem Wasser gründlich gespült.

Die in einem Phosphorsäure-Elektrolyt mit 150 ± 10 g/L Phosphorsäure durchgeführte Anodisation erfolgt bei einer Temperatur von 20 °C - 60 °C bei einer Spannung von 50 V und mit einer Stromdichte von 5 - 20 A/dm². Für eine Oxidschichtdicke von etwa 1 µm liegt die Anodisierzeit bei etwa 40 - 120 sec.

Die zu prüfenden Aluminiumfolien wurden in 150 mm x 25 mm Streifen geschnitten. Die zugeschnittenen Streifen wurden anschliessend von Hand in ein speziell für diese Prüfstreifen vorgesehenes Spritzgiesswerkzeug gelegt. Zum Hinterspritzen wurden die nachstehend angeführten Kunststoffe eingesetzt:
PA66 GF30 (Lanxess Durethan DP BKV 30 XF)
   PA66 = Polyamid-66, leichtfliessend, um eine möglichst gute mechanische "Verankerung" des Kunststoffes zum Aluminium zu erreichen.
ABS/PC GF 20 (Polychemie Polyblend 45FSGF20)
   ABS/PC = Acrylnitril-Butadien-Styrol/Polycarbonat Block-Copolymer

Die folgenden Verarbeitungsparameter wurden eingestellt:
Kunststoff-Massetemperatur Tₘ = 270 °C
Werkzeugtemperatur T_{w} = 80 - 130 °C
Kühlzeit T = 30 sec

Die Haftung der mit Polyamid 66 und mit ABS/PC hinterspritzten Aluminiumfolien zum Kunststoff wurde untersucht. Hierbei wurde mittels Rollschälversuch nach DIN 53530 der Trennwiderstand in N/mm ermittelt.

Jeweils 4 Muster je Einstellung wurden nach der BMW-Norm 303.4 Teil b einem Klimawechseltest unterzogen. Die Testdauer betrug 240 Stunden bei eine definierte Luftfeuchtigkeit, die Prüftemperatur wechselte alternierend zwischen + 80°C und - 30°C. Nach dem Klimawechseltest wurde der Trennwiderstand der Proben ebenfalls mittels Rollschälversuch ermittelt.

Wie aus der nachstehenden Tabelle hervorgeht, bewegt sich der Trennwiderstand der phosphorsäureanodisierten Aluminiumoberfläche bei der Hinterspritzung mit Polyamid-66 je nach Werkzeugtemperatur zwischen 3.3 N/mm und 5 N/mm. Diese Werte liegen um einen Faktor 2 über dem Trennwiderstand der mit Haftvermittler versehenen Aluminiumfolien. Der Trennwiderstand von über 3 N/mm ist bereits bei einer für den Serienprozess günstigen, niedrigen Verarbeitungstemperatur von 80°C beachtlich.

**Tabelle: Trennwiderstand in Abhängigkeit von der Werkzeugtemperatur**

| PA66 GF30 | Trennwiderstand [N/mm] | | | | |
|---|---|---|---|---|---|
| | 80°C | 90°C | 100°C | 110°C | 120°C |
| vor Klimawechseltest | 3.3 | 3.8 | 4.0 | 4.8 | 5.0 |
| nach Klimawechseltest | 2.8 | 3.2 | 3.6 | 4.7 | 4.9 |

Der Trennwiderstand nimmt bei der mit Polyamid-66 hinterspritzten Aluminiumfolie mit der phosphorsäureanodisierten Oberfläche durch den Klimawechseltest etwas ab. Die Abnahme liegt jedoch bei maximal 16 %. Der Trennwiderstand ist aber immer noch in einem sehr guten Bereich. Bei der mit ABS/PC hinterspritzten Aluminiumfolie mit der phosphorsäureanodisierten Oberfläche liegt die Trennwiderstandabnahme nur unwesentlich höher.

## Patentansprüche

1. Gegenstand aus einer mit Kunststoff hinterspritzten Aluminiumfolie mit einer porösen anodischen Oxidschicht als Haftgrund,
**dadurch gekennzeichnet, dass**
die Aluminiumfolie eine in Phosphorsäure erzeugte anodische Oxidschicht mit einer Dicke von 200 nm bis 2000 nm aufweist.

2. Gegenstand nach Anspruch 1, **dadurch gekennzeichnet, dass** die anodische Oxidschicht eine Dicke von 800 nm bis 1500 nm aufweist.

3. Gegenstand nach Anspruch 1 oder 2, **dadurch gekennzeichnet, dass** die Aluminiumfolie eine Dicke von 100 µm bis 800 µm, insbesondere 150 µm bis 500 µm, aufweist.

4. Gegenstand nach einem der Ansprüche 1 bis 3, **dadurch gekennzeichnet, dass** der Kunststoff ein thermoplastisches Polyurethan (TPU), insbesondere ein Acrylnitril-Butadien-Styrol/Polycarbonat Block-Copolymer, ist.

5. Gegenstand nach einem der Ansprüche 1 bis 3, **dadurch gekennzeichnet, dass** der Kunststoff ein thermoplastisches Polyamid (TPA), insbesondere ein Polyamid-66, ist.

6. Verfahren zur Herstellung eines Gegenstandes aus einer mit einem Kunststoff hinterspritzten Aluminiumfolie mit einer porösen anodischen Oxidschicht als Haftgrund,
**dadurch gekennzeichnet, dass**
auf einer Aluminiumfolie durch anodische Oxidation in einem Phosphorsäure-Elektrolyt eine poröse Oxidschicht als Haftgrund mit einer Dicke von 200 nm bis 2000 nm erzeugt und die Aluminiumfolie auf der mit der anodischen Oxidschicht belegten Seite mit dem Kunststoff hinterspritzt wird.

7. Verfahren nach Anspruch 6, **dadurch gekennzeichnet, dass** die Dicke der anodischen Oxidschicht 800 nm bis 1500 nm beträgt.

8. Verfahren nach Anspruch 6 oder 7, **dadurch gekennzeichnet, dass** die Aluminiumfolie eine Dicke von 100 µm bis 800 µm, insbesondere 150 µm bis 500 µm, aufweist.

9. Verfahren nach einem der Ansprüche 6 bis 8, **dadurch gekennzeichnet, dass** der Kunststoff ein thermoplastisches Polyurethan (TPU), insbesondere ein Acrylnitril-Butadien-Styrol/Polycarbonat Block-Copolymer, ist.

10. Verfahren nach einem der Ansprüche 6 bis 8, **dadurch gekennzeichnet, dass** der Kunststoff ein thermoplastisches Polyamid (TPA), insbesondere ein Polyamid-66, ist.
